# EUROPEAN PATENT APPLICATION

(11) **EP 4 523 876 A1**
(43) Date of publication of application: **19.03.2025**
(21) Application number: 23196859.5
(22) Date of filing: 12.09.2023
(51) Int. Cl.: B29B 17/02

(54) **PROCESS FOR SEPARATING FOAMED PARTICLES FROM POLYOLEFIN FLAKES**

(71) Applicant: QCP Holding B.V., 6161 RE Geleen (NL)
(72) Inventor: Essers, Franciscus Elisabeth Jacobus, 6161 RE Geleen (NL); Venerius, Johannes, 6161 RE Geleen (NL)
(74) Representative: LyondellBasell

(57) **Abstract**

The invention relates to a process for separating foamed particles from polyolefin flakes comprising the steps of:
a. providing a first aqueous mixture comprising foamed particles and polyolefin flakes, wherein the first aqueous mixture has less than 5%, preferably less than 2% of organic solvent, wherein the first aqueous mixture contains air bubbles to have a density that ranges between 600-850 kg/m3 and wherein the first aqueous mixture comprises a surfactant in a range of 0.05-2 wt%, wherein the wt% is relative to the total weight of the first aqueous mixture;
b. introducing the first aqueous mixture in a tank (10) comprising a feeding port (11), a first compartment (18), a second compartment (28), a conveyor element (13), a discharge port (15) and a transfer port (25), wherein the first aqueous mixture is in motion keeping the polyolefin flakes suspended in the first aqueous mixture and, allowing the formation of a top layer (17) with floating foamed particles and a bottom layer (12) of a second aqueous mixture containing suspended polyolefin flakes;
c. discharging through the discharge port (15) of the first compartment (18) the layer (17) of floating foamed particles by using the conveyor element (13);
d. displacing the second aqueous mixture to the second compartment (28) and releasing air to obtain a third aqueous mixture having a density between 900-1050 kg/m3 comprising suspended polyolefin flakes; and
e. discharging the third aqueous mixture through the transfer port (25), wherein the third aqueous mixture comprises less than 0.1 vol% of foamed particles.

## Description

### Field of the invention

The invention relates to a process for separating foamed particles from polyolefin flakes in a plastic recycling apparatus and an apparatus for separating foamed particles from polyolefin flakes.

### State of the art

The omnipresence of plastic packaging and the importance of environmental policy have led to the increased importance of recycled plastic materials. The recycling of paper, textiles, glass or metals is already carried out on a large scale, whether by separate collection or by sorting of the recycled materials. The recycling of plastic waste and re-use of plastics is also increasing.

Plastic recycling is the reprocessing of plastic waste into new products. When performed correctly, this can reduce dependence on landfill, conserve resources and protect the environment from plastic pollution. Almost all plastic is non-biodegradable and thus builds up in the environment, where it can cause harm. Virgin polymer composition replacement is considered to represent the only way forward to solve the global plastic waste problem, to stop the depletion of natural resources, and to facilitate a circular economy.

Recycling is performed by remelting and reforming used plastic into new items (mechanical recycling) or converting waste plastic into its starting chemicals (feedstock recycling) which can then be reprocessed back into fresh plastic.

Plastic waste consists of various polymer types used in an article (e.g. package). Polyolefins make up nearly 50% of all plastic waste and more than 90% of waste is made of thermosoftening polymers, which can be remelted.

Polypropylene (PP), polyethylene (PE), polyethylene terephthalate called also polyester (PET) and high-density polyethylene (HDPE) have the highest recycling rates, whereas polystyrene (PS) and polyurethane (PU) are often barely recycled.

Expanded polystyrene (EPS), foamed polypropylene (fPP), foamed polyethylene (fPE), foamed Polyurethaan (fPU) and foamed crosslinked polyethylene (fXLPE) are widely present in household waist. It has been a material of choice for more than 50 years because of its versatility, performance and cost-effectiveness. Expanded polystyrene (EPS) is a thermoplastic foam product (made for its 98% of air), which is lightweight, strong and durable, with shock absorption and insulating properties. Expanded polystyrene (EPS) is found in many everyday articles, such as chilled produce boxes, for example for fish, bicycle helmets and insulation materials. EPS foam is highly resistant to normal biodegradation processes, occupying a substantial amount of space in landfills and waste storage site and potentially causing disposal problems. A solution to this problem can be increasing the recycling of foamed plastic materials but unfortunately, up today the recycling of foamed plastic material is very difficult because the apparatus available are not able to perform automatically a complete separation between the foamed material and the polyolefin material.

The foamed particles pollute the recycling equipment by accumulating in it, damaging the equipment and/or causing the equipment to stop functioning. Moreover, when the foamed particles are not completely separated from the polyolefin flakes material, the mechanical properties of the recycled polyolefin material will be negatively influenced for example rendering the articles manufactured more brittle.

Although normally the plastic comprises only 0.1% of foamed materials, its particles may accumulate in the equipment in certain recycling steps because of the lower density of the foamed particles. In some cases it may reach above 60 vol%, thereby limiting the amount of water/polyolefin dispersion to be used in the process. Under these conditions the equipment (e.g. pumps) may stop functioning unless the accumulated foamed particles are effectively removed. Up to date the removal of the accumulated foamed particles in the equipment is manually performed every few days.

The aim of the invention is to minimize the accumulation of foamed particle in a plastic recycling apparatus and in separating the foamed particles from polyolefin flakes allowing for an efficient, simple and easy recycling process.

CN104441324 describes a separation device comprising a stirring device for the separation of the expanded polystyrene (EPS) from a plastic film. This process uses mixed solvents consisting of water and alcohols for separating polymer particles.

There is a need for an economically viable device and process that can perform a continuous separation of foamed particles from polyolefin flakes providing high separation efficiency in a cost effective and reliable manner.

After extensive studies, the inventor(s) solved the above-mentioned problems and developed a new apparatus and a novel process for a continuous separation of foamed particles from polyolefin flakes to be used in a plastic recycling system.

### Summary of the invention

The present invention relates to a process for separating foamed particles from polyolefin flakes, the process comprising the steps of:
a) providing a first aqueous mixture comprising foamed particles and polyolefin flakes, wherein the first aqueous mixture has less than 5% of an organic solvent, wherein the first aqueous mixture contains air bubbles to have a density that ranges between 600-850 kg/m3 and wherein the first aqueous mixture comprises a surfactant in a range of 0.05-2 wt%, wherein the wt% is relative to the total weight of the first aqueous mixture;
b) introducing the first aqueous mixture in a tank 10, comprising a feeding port 11, a first compartment 18, a second compartment 28, a conveyor element 13, a discharge port 15 and a transfer port 25, wherein the first aqueous mixture is in motion keeping the polyolefin flakes suspended in the first aqueous mixture;
c) allowing the formation of a top layer of floating foamed particles and a bottom layer of a second aqueous mixture containing suspended polyolefin flakes;
c) discharging through the discharge port 15 of the first compartment 18 the floating foamed particles by using the conveyor element 13 and displacing the second aqueous mixture to the second compartment 28;
d) releasing air from the second aqueous mixture to obtain a third aqueous mixture having a density between 900-1050 kg/m3 comprising suspended polyolefin flakes; and
e) discharging the third aqueous mixture through the transfer port 25, wherein the third aqueous mixture comprises less than 0.1 vol% of foamed particles.

### General recycling process and problem to be solved

The recycling process begins with the collection and sorting of waste. The waste may be sorted by both polymer type and colour to give a material suitable for recycling. This preliminary sorting can be performed with the aid of near infrared, for example. Successively, the plastic material comprising polyethylene (PE) and/or polypropylene (PP) is typically shredded into flakes/particles, which preferably are washed in a cold wash followed by alkaline hot wash to provide clean polymer flakes. The PE and PP flakes also may comprise low amounts of foamed particles, like EPS, which have a low density compared to the PP and/or PE flakes.

The expanded polystyrene (EPS) particles present in recycled PE or PP will negatively affect the properties of the recycled polyolefin material, for example rendering the articles manufactured more brittle. Moreover, the expanded polystyrene (EPS) particles will pollute the recycling equipment by accumulating in it, damaging the equipment and/or causing the equipment to stop functioning.

To be able to perform a large-scale continuous production for recycling, the above-mentioned problems need to be solved.

Surprisingly the inventors of the current invention found that foamed particles could be efficiently separated from polyolefin flakes by the process and the apparatus of the current invention. The process and the apparatus of the current invention are simple and can advantageously be used for continuous and large-scale plastic recycling.

### Description of the drawings

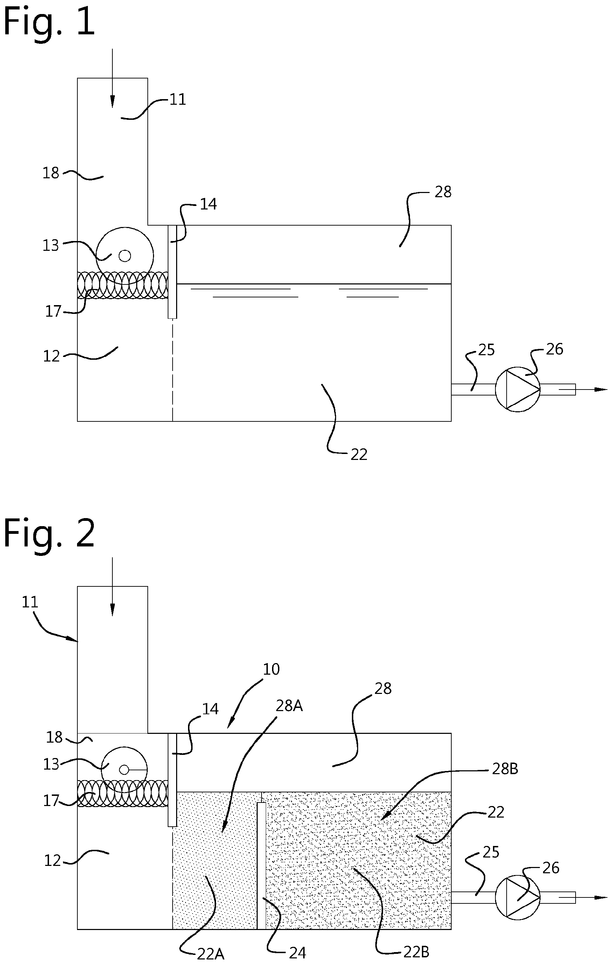

Figure 1 shows an apparatus comprising: a tank 10, a feeding port 11, a conveyor element 13, a discharge port 15 (not shown), a transfer port 25, a pump 26, a first baffle 14, a first compartment 18, a second compartment 28, a first aqueous mixture, a layer with floating foamed particles 17, a second aqueous mixture 12, a third aqueous mixture 22.
Figure 2 shows an apparatus comprising: a tank 10, a feeding port 11, a conveyor element 13, a discharge port 15 (not shown), a transfer port 25, a pump 26, first baffle 14, a second baffle 24, a first compartment 18, a second compartment 28 which is divided by the second baffle 24 in a subcompartment 28A and a subcompartment 28B, a first aqueous mixture, a layer with floating foamed particles 17, a second aqueous mixture 12, a third aqueous mixture 22A, a third aqueous mixture 22B.

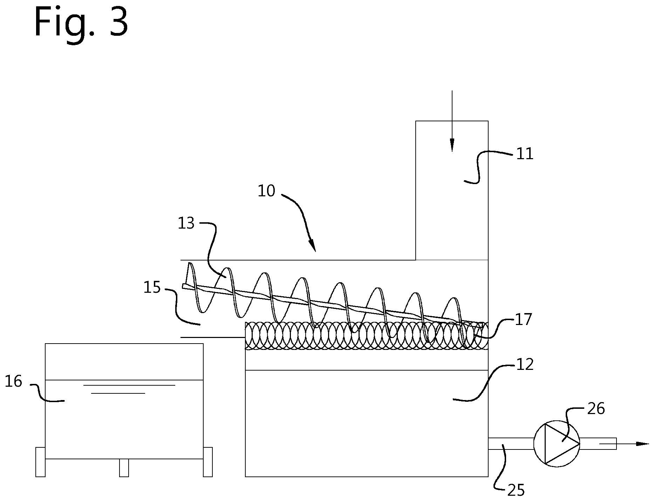

Figure 3 shows a front view of the apparatus according to figure 1, showing the tank 10, inlet 11, screw 13 for discharging the layer of foamed particles 17, discharge port 15, container 16 for discharged foamed particles 17 and transfer port 25 to pump 26 for discharging the third aqueous mixture.

### Detailed description of the invention

The present invention relates to a process for separating foamed particles from polyolefin flakes, process comprising the steps of:
a) providing a first aqueous mixture comprising foamed particles and polyolefin flakes, wherein the first aqueous mixture has less than 5% of an organic solvent, wherein the first aqueous mixture contains air bubbles to have a density that ranges between 600-850 kg/m3 and wherein the first aqueous mixture comprises a surfactant in a range of 0.05-2 wt%, wherein the wt% is relative to the total weight of the first aqueous mixture;
b) introducing the first aqueous mixture in a tank 10, comprising a feeding port 11, a first compartment 18, a second compartment 28, a conveyor element 13, a discharge port 15 and a transfer port 25, wherein the first aqueous mixture is in motion keeping the polyolefin flakes suspended in the first aqueous mixture;
c) allowing the formation of a top layer of floating foamed particles and a bottom layer of a second aqueous mixture containing suspended polyolefin flakes;
c) discharging through the discharge port 15 of the first compartment 18 the floating foamed particles by using the conveyor element 13 and displacing the second aqueous mixture to the second compartment 28;
d) releasing air from the second aqueous mixture to obtain a third aqueous mixture having a density between 900-1050 kg/m3 comprising suspended polyolefin flakes; and
e) discharging the third aqueous mixture through the transfer port 25, wherein the third aqueous mixture comprises less than 0.1 vol% of foamed particles.

The process of the present invention starts providing a first aqueous mixture comprising foamed particles and polyolefin flakes.

As known to the skilled person in the art, foamed materials are obtained from various plastics such as polypropylene (PP), polystyrene (PS), polyethylene (PE) and polyurethane (PU) using methods known in the art. Foamed materials having various densities can be obtained and are commonly used in plastic products, alone or in combination with non-foamed materials.

The term "foamed particles" according to the present invention refers to small pieces of foamed material obtained when foamed material is subjected to shredding. Small can be for example a particles having a maximum cross section of 1 cm to 10 cm, preferably a maximum cross section between 1 cm and 5 cm.

The foamed particles of the current invention are selected from the list of expanded polystyrene (EPS) particles, foamed polypropylene (fPP) particles, foamed polyethylene (fPE) particles, foamed Polyurethaan (fPU) particles and foamed crosslinked polyethylene (fXLPE) particles or a mixture thereof.

The foamed particles of the current invention may have a bulkdensity below 500 g/m³, preferably below 400 g/m³, more preferably below 300 g/m³.

As known to the skilled person in the art, polyolefins are polymers usually derived from a small set of simple olefins (alkenes) and are widely used. Many polyolefins also having different properties as thermoplastic polyolefins or polyolefin elastomers are known in the art. In a commercial sense the most dominant polyolefins are polyethylene (PE) and polypropylene (PP) which are commonly used in many materials. Polyethylene (PE) is commonly used in film for wrapping of goods, blow molding (e.g., liquid containers, bleach bottles), injection molding (e.g., toys, screw caps), extrusion coating (e.g., coating on milk cartons), piping for distributing water and gas, insulation for wires and cables as telephone cables. Polypropylene is commonly used in injection molding, fibers, and film.

The term " polyolefin flakes" according to the present invention refers to small pieces of polyolefin material obtained when plastic material is subjected to shredding.

The polyolefin flakes of the current invention are selected from the list of polypropylene (PP) flakes, like for example homo-polymer PP flakes, copolymer PP flakes, stereo-block PP flakes, propylene-butane copolymers flakes; polyethylene (PE) flakes, like for example low-density polyethylene (LDPE) flakes, linear low-density polyethylene (LLDPE) flakes, very-low-density polyethylene (VLDPE) flakes, ultra-low-density polyethylene (ULDPE) flakes, medium-density polyethylene (MOPE) flakes and polymethylpentene (PMP) flakes, or a mixture thereof.

Preferably the polyolefin flakes of the current invention are selected from the list of polypropylene (PP) flakes and polyethylene (PE) flakes or a mixture thereof.

The first aqueous mixture used in the current invention has less than 5%, preferably less than 2% of organic solvent. The term "organic solvent" according to the present invention refers to carbon-based substances capable of dispersing the foamed particles and polyolefin flakes of the current invention. Examples of organic solvent that may be present are alcohols like methanol, ethanol, propanol. Preferably no organic solvent is added to the process of the invention, but some organic solvents can be present as part of the contamination of the plastics obtained from waste streams.

The amount of foamed particles in the first aqueous mixture typically ranges between 0.5-2 vol% (relative to the volume of the first aqueous mixture).

Advantageously, the process of the current invention allows for an efficient separation of foamed particles from polyolefin flakes without the need of the addition of organic solvent, thereby improving safety, environmental impact and avoiding the problem of recovering and disposal of organic solvent; the process is simple, scalable, energy efficient and can be applied in any type of recycling plant.

The first aqueous mixture used in the current invention has a density that ranges between 600-850 kg/m³, preferably between 650-800 kg/m³, more preferably between 670-750 kg/m³. The specific density of the first aqueous mixture is achieved by the presence of air bubbles in the first aqueous mixture. When the density of the first aqueous mixture of the invention is below 600 kg/m³ or above 850 kg/m³ the foamed particles may not be efficiently separated from polyolefin flakes.

Air bubbles can be entrapped by different means. For example air can be entrapped by washing the flakes in (for example) a friction washer, or by adding water comprising air bubbles from a separate system. The presence of a surfactant is important in stabilizing the air bubbles.

The first aqueous mixture comprises a surfactant in a range of 0.05-2 wt%; preferably 0.2-1 wt%, wherein the wt% is relative to the total weight of the first aqueous mixture. A too low amount of surfactant may not yield a stable suspension of air bubbles causing a too high density of the first aqueous mixture, while a too high amount of surfactant may cause foaming of the first aqueous mixture or yield a too stable suspension, which may result in a second aqueous mixture not able to release entrapped air. As known to the skilled person in the art, surfactants are chemical compounds that decrease the surface tension or interfacial tension between two liquids, a liquid and a gas, or a liquid and a solid. Surfactants may function as emulsifiers, wetting agents, detergents, foaming agents, or dispersants.

Any surfactant known to the skilled person in the art may be used in the current invention. Surfactants include carboxyl groups, primary amine salts of hydrophilic groups such as hydroxyl groups and amine groups, sodium alkylnaphthalene sulfonates, long-chain fatty alcohols, polyoxyethylene ethers, polycarboxylates, etc. In a recycling process of household waste, many different surfactants are present from for example shampoo bottles. If needed, additional surfactant can be added in the process according to the invention.

Preferably a non-ionic surfactant comprising ethyleneoxide groups can be added to the suspension in an amount between 0.01 and 0.5 wt% relative to the first aqueous mixture.

The first aqueous mixture used in the current invention may comprise an antifoaming agent. As known to the skilled person in the art, an antifoaming agent is a chemical additive that reduces and hinders the formation of foam as air bubbles in industrial process liquids. The term "antifoaming agent" according to the present invention is interchangeable with the term "defoamer". Hence, the term "antifoaming agent" according to the present invention refers to additives that can eliminate existing foam or prevents the formation of further foam. Commonly known antifoaming agents are insoluble oils, certain alcohols, polydimethylsiloxanes (PDMS) and other silicones, stearates and glycols. Preferably the antifoaming agent used in the present invention is polydimethylsiloxane (PDMS). The antifoaming agent may be used in a range of 0-0.5 wt%, preferably of 0.1-0.4 wt%, wherein the wt% is relative to the total weight of the first aqueous mixture. The antifoaming agent can be used to balance the air release of the second aqueous mixture and prevent excessive foaming in the system.

The first aqueous mixture of the current invention is introduced in a first compartment of the tank 10. The tank 10 designed for use in the current invention may have any shape, particularly a shape which enables creating residence times which are sufficient to separate the foamed particles from the first aqueous mixture and residual air from the second aqueous mixture. Basically, the tank 10 has at least two compartments, namely, a first compartment 18 and a second compartment 28, which compartments 18, 28 are in fluid communication to each other. Residence time in the first compartment 18 preferably ranges between 20 and 40 seconds. Residence time in the second compartment 28 preferably ranges between 1 and 2 minutes. Many embodiments of the tank 10 are feasible in which the preferred residence times can actually be realized. In a preferred embodiment of the tank 10, the second compartment 28 is split so that a configuration of the tank 10 is obtained in which a first subcompartment 28A of the second compartment 28 and a second subcompartment 28B of the second compartment 28 are present besides the first compartment 18. To that end, the tank 10 is provided with a baffle 24 at an appropriate position in the second compartment 28, which baffle 24 extends in a generally upward direction from the bottom of the tank 10.

The residence time in the first subcompartment 28A of the second compartment 28 preferably ranges between 20 and 50 seconds, while the residence time in the second subcompartment 28B of the second compartment preferably ranges between 30 seconds and 1.5 minutes.

It is preferred that all aqueous mixtures in tank 10 are in motion so that the polyolefin flakes are well suspended. Preferably no settling of polyolefin flakes occurs in tank 10. In other words substantially all (at least 98%, preferably at least 99%, more preferably at least 99.9%) polymer flakes are well suspended in the different aqueous mixtures.

Preferably, the tank 10 designed for use in the current invention is unpressurized to facilitate the low density of the first aqueous mixture having air bubbles, while keeping the polyolefin flakes suspended in the first aqueous mixture and allowing the foamed particles to float to the top surface of the first aqueous mixture. The foamed particles on the top surface of the first aqueous mixture preferably form a layer 17 comprising floating foamed particles. After the foamed particles form a layer 17, a second aqueous mixture 12 containing polyolefin flakes is being formed, having a reduced amount of foamed particles. The amount of foamed particles in the second aqueous mixture is preferably less than 0.1 vol%, relative to the volume of the second aqueous mixture. The density of the second aqueous mixture preferably ranges between 600 and 850 kg/m3. The second aqueous mixture is displaced to the second compartment 28 in order to release entrapped air from the mixture and to form a third aqueous mixture having a higher density, with a low amount or no entrapped air. Preferably the density of the third aqueous mixture ranges between 900 and 1050 g/l.

The entrapped air can be released through the discharge port 15 that is present in the tank 10 as shown.

The conveyor element 13 designed for use in the current invention is located such that in operation it is able to discharge the layer 17 with foamed particles through the discharge port 15. The conveyor element 13 is functional to move the layer 17 of floating foamed particles out through the discharge port and can be realized in any suitable way in the framework of the invention. Examples of the conveyor element 13 designed for use in the current invention are for example a conveyor screw, a rivet, a conveyor blade, a conveyor paddle, blade, a skimmer and a pump. The option of the conveyor element 13 designed for use in the current invention being a screw is a preferred option.

The transfer port 25 designed for use in the current invention is preferably located close to or at the bottom of the tank 10 in the second compartment 28, and preferably in the first subcompartment 28B of the second compartment 28. Preferably a pump 26 is applied to actively withdraw the third aqueous mixture from the second compartment 28, or, in case the second compartment 28 is split, the second subcompartment 28B of the second compartment.

In the present embodiment of the invention, the tank 10 comprises a first baffle 14, disposed vertically from the top of tank 10, which baffle 14 separates the tank 10 into the first compartment 18 and the second compartment 28. The term "baffle" according to the present invention is intended to cover any type of barrier having the function of at least partially obstructing and directing the flow of the aqueous mixture, wherein a panel is a practical example of such a barrier.

Different designs of the first baffle 14 and different positions of the first baffle 14 in the tank 10 may be considered. Preferably, the first baffle 14 is of uncomplicated design and is fitted from the top of the tank 10, wherein a lower edge of the first baffle 14 is generally straight. Preferably, the first baffle 14 has a dimension in the generally downward direction. In an embodiment the first baffle 14 is permeable to air released from the aqueous mixtures in the second compartment 28, whereby the air can travel from the second compartment 28 to the first compartment 18 and exit tank 10. The first compartment 18 comprises the feeding port 11, the conveyor element 13, the discharge port 15, and the second compartment 28 comprises the transfer port 25.

The above-described design of the tank 10 provides the possibility to control the presence of air bubbles in the tank 10. The fact is that in the first compartment 18, many air bubbles are present which provide the first aqueous mixture having a low density, and that the foamed particles 17 can float to the top, while the polyolefin flakes are dispersed in the aqueous mixture. After passing the baffle the third aqueous mixture is allowed to have a longer residence time, compared to the first compartment 18, in order to let the air escape from the second aqueous mixture and to increase the density of the mixture.

The first baffle 14 of the current invention may extend in the generally downward direction for at least 50% of the total height of the tank 10, preferably between 50% and 70% of the total height of the tank 10. It is possible that the first baffle 14 is arranged to be moved vertically up and down in the tank 10, so that a length along which the baffle 14 extends from the top of the tank 10 can be varied and residence times of the aqueous mixtures in the first compartment 18 and the second compartment 28 can be controlled.

In the case that the second compartment 28 is split, the tank 10 designed for use in the current invention may further comprise a second baffle 24. Different designs of the second baffle 24 and different positions of the second baffle 24 in the tank 10 may be considered. Preferably, the second baffle 24 is of uncomplicated design and is fitted from the bottom of the tank 10, wherein an upper edge of the second baffle 24 is generally straight. The third aqueous mixture is split into a third aqueous mixture 22A in the first subcompartment 28A of the second compartment 28 and a third aqueous mixture 22B in the second subcompartment 28B of the second compartment 28 by the second baffle 24.

The above-described design provides further control of the air bubbles distribution in the third aqueous mixture 22A located in the first subcompartment 28A of the second compartment 28 and in the third aqueous mixture 22B located in the second subcompartment 28B of the second compartment 28, allowing a continuous constant flow of the aqueous mixture and discharge of the third aqueous mixture 22B through the transfer port 25 and avoiding malfunctioning of the equipment caused by air bubbles at the transfer port. The control of the air bubbles is such that the third aqueous mixture 22A in the first subcompartment 28A of the second compartment 28 may have a density that ranges between 850-900 kg/m³ while the third aqueous mixture 22B in the second subcompartment 28B of the second compartment 28 may have a density that ranges between 900-1050 kg/m³. Hence, the air bubbles in the third aqueous mixture 22B are reduced to the point that the third aqueous mixture 22B does not substantially contain air bubbles.

The second baffle 24 of the current invention may further be movably arranged in the tank 10, particularly be arranged to move in the horizontal plane towards and away from the first baffle 14. The second baffle 24 may extend up for at least 50% of the total height of the tank 10, preferably between 50% and 70% of the total height of the tank 10. In an embodiment, the second baffle 24 may overlap in the vertical direction with the first baffle 14 between 10% and 40%, preferably between 20% and 30%. It is possible that the second baffle 24 is arranged to be moved vertically up and down in the tank 10, so that a length along which the baffle 24 extends from the bottom of the tank 10 can be varied and residence times of the aqueous mixtures in the subcompartments 28A, 28B of the second compartment 28 can be controlled.

The current invention relates also to an apparatus for separating foamed particles from polyolefin flakes, the apparatus comprising:
a tank 10, a feeding port 11, a conveyor element 13, a discharge port 15, a transfer port 25, a first baffle 14 and a second baffle 24,
wherein the first baffle 14 is fitted from the top of the tank 10 and it is permeable to air at the top and defines a first, and a second compartment 28,
wherein the second baffle 24 is fitted from the bottom of the tank 10 splitting the second compartment 28 in a subcompartment 28A and a subcompartment 28B,
wherein the first compartment 18 comprises the feeding port 11, the conveyor element 13 and the discharge port 15,
wherein the subcompartment 28B comprises the transfer port 25 located at the bottom part of the tank 10,
wherein the apparatus in the first compartment 18 comprises in use a first aqueous mixture comprising foamed particles and polyolefin flakes, wherein the first aqueous mixture in the first compartment 18 has a density that ranges between 600-850 kg/m3,
wherein the first aqueous mixture is in motion keeping the polyolefin flakes suspended in the first aqueous mixture and, allowing the formation of a top layer with floating foamed particles 17 and bottom layer with a second aqueous mixture 12 containing suspended polyolefin flakes,
wherein the conveyor element 13 discharges the layer with floating foamed particles 17 through the discharge port 15 of the tank 10,
wherein the second aqueous mixture 12 is displaced into the second compartment 28, wherein entrapped air is released forming a third aqueous mixture 22 being in motion such that the polyolefin flakes are suspended.

In a preferred embodiment the third aqueous mixture 22 forms a third aqueous mixture 22A having a density between 600 and 900 kg/m3 in the subcompartment 28A and a third aqueous mixture 22B having a density that ranges between 900-1100 kg/m3 in subcompartment 28B,
wherein the third aqueous mixture 22B in the second compartment 28B comprises less than 1 vol% of foamed particles 17,
wherein pump 26 transfers the third aqueous mixture 22B of the subcompartment 28B outside the tank 10 through the transfer port 25.

The above-described apparatus of the present invention can be used alone or as part of a waste plastics overall recycling apparatus.

## Claims

1. A process for separating foamed particles from polyolefin flakes comprising the steps of:
a. providing a first aqueous mixture comprising foamed particles and polyolefin flakes, wherein the first aqueous mixture has less than 5%, preferably less than 2% of organic solvent, wherein the first aqueous mixture contains air bubbles to have a density that ranges between 600-850 kg/m3 and wherein the first aqueous mixture comprises a surfactant in a range of 0.05-2 wt%, wherein the wt% is relative to the total weight of the first aqueous mixture;
b. introducing the first aqueous mixture in a tank (10) comprising a feeding port (11), a first compartment (18), a second compartment (28), a conveyor element (13), a discharge port (15) and a transfer port (25), wherein the first aqueous mixture is in motion keeping the polyolefin flakes suspended in the first aqueous mixture and, allowing the formation of a top layer (17) with floating foamed particles and a bottom layer (12) of a second aqueous mixture containing suspended polyolefin flakes;
c. discharging through the discharge port (15) of the first compartment (18) the layer (17) of floating foamed particles by using the conveyor element (13);
d. displacing the second aqueous mixture to the second compartment (28) and releasing air to obtain a third aqueous mixture having a density between 900-1050 kg/m3 comprising suspended polyolefin flakes; and
e. discharging the third aqueous mixture through the transfer port (25), wherein the third aqueous mixture comprises less than 0.1 vol% of foamed particles.

2. The process according to claim 1, wherein the foamed particles are expanded polystyrene (EPS) particles and the polyolefin flakes are polyethylene (PE) flakes and/or polypropylene (PP) flakes.

3. The process according to claim 1 or 2, wherein the foamed particles have a density below 500 g/m³, preferably below 400 g/m³, more preferably below 300 g/m³.

4. The process according to any one of the preceding claims, wherein amount of foamed particles in the first aqueous mixture ranges between 0.5-2 vol%.

5. The process according to any one of the preceding claims, wherein between the density of the first aqueous mixture ranges between 650-800 kg/m³, more preferably between 670-750 kg/m³.

6. The process according to any one of the preceding claims, wherein first aqueous mixture comprises air bubbles for achieving the density.

7. The process according to any one of the preceding claims, wherein the first aqueous mixture comprises a surfactant in a range of 0.2-1 wt%.

8. The process according to any one of the preceding claims, wherein a non-ionic surfactant comprising ethyleneoxide groups is present in the first aqueous mixture in an amount between 0.01 and 0.5 wt% relative to the first aqueous mixture.

9. The process according to any one of the preceding claims, wherein an antifoaming agent is used, preferably wherein the antifoaming agent is polydimethylsiloxane (PDMS) and wherein the antifoaming agent is used in a range of 0.1-0.4 wt%, wherein the wt% is relative to the total weight of the first aqueous mixture.

10. The process according to any one of the preceding claims, wherein the residence time in the first compartment 18 ranges between 20 and 40 seconds and the residence time in the second compartment 28 ranges between 1 and 2 minutes

11. The process according to any one of the preceding claims, wherein the second compartment (28) is split into a second compartment (28A) and second compartment (28B) by placing a baffle in second compartment (28) from the bottom of tank (10) up.

12. The process according any one of the preceding claims, wherein the residence time in compartment (28A) ranges between 30 and 50 seconds, while the residence time in compartment (28B) ranges between 40 seconds and 1.5 minutes.

13. The process according to any one of the preceding claims, wherein, the conveyor element (13) designed for use is a screw.

14. An apparatus for separating foamed particles from polyolefin flakes, the apparatus comprising: a tank 10, a feeding port 11, a conveyor element 13, a discharge port, a transfer port 25, a first baffle 14 and a second baffle 24,
wherein the first baffle 14 is fitted from the top of the tank 10 and it is permeable to air at the top and defines a first, and a second compartment 28,
wherein the second baffle 24 is fitted from the bottom of the tank 10 splitting the second compartment 28 in a subcompartment 28A and a subcompartment 28B,
wherein the first compartment 18 comprises the feeding port 11, the conveyor element 13 and the discharge port 15,
wherein the subcompartment 28B comprises the transfer port 25 located at the bottom part of the tank 10,
wherein in use the apparatus in the first compartment 18 comprises a first aqueous mixture comprising foamed particles and polyolefin flakes, wherein the first aqueous mixture in the first compartment 18 has a density that ranges between 600-850 kg/m3,
wherein the first aqueous mixture is in motion keeping the polyolefin flakes suspended in the first aqueous mixture and, allowing the formation of a top layer with floating foamed particles 17 and bottom layer with a second aqueous mixture 12 containing suspended polyolefin flakes,
wherein the conveyor element 13 discharges the layer with floating foamed particles 17 through the discharge port 15 of the tank 10,
wherein the second aqueous mixture 12 is displaced into the second compartment 28, wherein entrapped air is released forming a third aqueous mixture 22 being in motion such that the polyolefin flakes are suspended,
wherein pump 26 transfers the third aqueous mixture 22B of the subcompartment 28B outside the tank 10 through the transfer port 25.

15. The apparatus according to claim 14, wherein in use the third aqueous mixture 22 forms a third aqueous mixture 22A having a density between 600 and 900 kg/m3 in the subcompartment 28A and a third aqueous mixture 22B having a density that ranges between 900-1100 kg/m3 in subcompartment 28B,
wherein the third aqueous mixture 22B in the second compartment 28B comprises less than 1 vol% of foamed particles 17.
